# EUROPEAN PATENT SPECIFICATION

(11) **EP 3 175 986 B1**
(45) Date of publication and mention of the grant of the patent: **01.05.2019**
(21) Application number: 16200851.0
(22) Date of filing: 28.11.2016
(51) Int. Cl.: B32B 37/00, D21G 1/00

(54) **PNEUMATIC POSITIONING OF FLATBED LAMINATOR ROLLER**
PNEUMATISCHE POSITIONIERUNG EINER FLACHBETTLAMINATORWALZE
POSITIONNEMENT DE PNEUMATIQUE DE ROULEAU LAMINEUR À PLAT

(30) Priority: 30.11.2015 GB 201521052
(43) Date of publication of application: 07.06.2017
(73) Proprietor: Vivid Laminating Technologies Limited, Leicestershire LE65 2UZ (GB)
(72) Inventor: WARD, Gavin, Coalville, Leicestershire LE67 3FA (GB)
(74) Representative: Serjeants LLP

(56) References cited:
- WO-A1-98/49394
- WO-A1-2016/185178
- GB-A- 2 227 502
- US-A- 1 575 539

## Description

### Technical field

The invention relates to flatbed laminators in which a workpiece to be laminated or on which a vinyl coating or other similar coating is to be adhered is placed on a flatbed and a roller is rolled over the workpiece. The workpiece may comprise a sheet to be laminated together with laminating film to be applied to a surface of the sheet or it may comprise a mounting, such as a foam board, and a coating to be adhered to the mounting, such as a vinyl layer. The gap between the roller and the workpiece needs to be adjusted according to the thickness of the workpiece in order that the desired pressure may be applied during the laminating process.

### Background of the invention

The roller of a flatbed laminator is mounted such that it can be moved towards or away from the flatbed in order to adjust the size of the gap between them it is also mounted such that it can be rolled along the flatbed, such a laminator is fabricated by Josero Limited, Swavesey, England (see copyright of Josero Limited 2015). The roller is normally arranged above the flatbed so that a workpiece can be positioned on the flatbed. Means are provided for lowering the roller until it comes into contact with a workpiece positioned on the flatbed and presses the workpiece against the flatbed and then rolling the roller along the flatbed such that the entire of the workpiece is laminated. As the roller rolls off the end of workpiece it may impact the flatbed due to a downward pressure acting on the roller. This may act to crush the end of the workpiece and is generally undesirable.

The means to adjust the gap between the roller and the flatbed is generally separate from the means that rolls the roller along the flatbed. In particular, the means for rolling the roller along the flatbed are generally separate from and not dependent on the means for adjusting the gap between the roller and the flatbed. The means for rolling the roller along the flatbed will roll the roller along the flatbed without adjusting the gap between the roller and the flatbed: a constant gap will be maintained between the roller and the flatbed, as determined by the means for adjusting the gap between the roller and the flatbed.

It is known to adjust the gap between the roller and the flatbed by purely mechanical means, typically controlled by a wheel on one end of a shaft that extends across the laminator. The wheel is turned manually to rotate the shaft, which then acts through gearing to raise or lower a mounting at each end of the roller. Such means allow the height of the roller to be adjustable through a continuous range and at any height a desired pressure can be applied by turning the wheel to a suitable position. However, mechanical means have the disadvantage that, owing to manufacturing tolerances or wear, it might not move the two ends of the roller by exactly equal amounts. If this occurs uneven pressure can be applied across the width of the workpiece.

As an alternative, it is known to adjust the gap between the roller and the flatbed by pneumatic means. Each end of the roller is supported on a pneumatic cylinder. By applying pressurised air to the pneumatic cylinders the roller can be moved towards the flatbed. The pneumatic system has the advantages that it can be actuated by the push of a button and that if both cylinders are supplied from a common source of pressurised air, they are guaranteed to apply equal pressure to the roller so pressure should be applied evenly across the width of the workpiece to the laminated.

A disadvantage of the pneumatic system is that the pressure applied to move the roller into position and maintain it there may be greater than the material of some workpieces can resist, for example if the workpiece is formed of foamed board. Thus the roller may crush the workpiece as the roller is brought into contact with the workpiece.

The problem that pneumatically operated rollers may crush delicate workpieces has been recognized and a known solution is to provide an insert that can be moved below the roller mountings to prevent the roller approaching the flatbed more closely than a fixed, minimum distance. Such inserts are generally separate from the laminator and are simply inserted below the roller mountings when required and removed when no longer required. As insert will have a stepped profile and the minimum distance is determined by the height of the selected step. Typically a few steps of different heights are provided to match standard thicknesses of workpiece but workpieces formed from the sheets and laminating materials of different manufacturers might not be exactly the same and non-standard thicknesses cannot be accommodated at all.

In light of the above there is a need for an improved flatbed laminator that can better control the distance between the roller and a workpiece positioned on the flatbed.

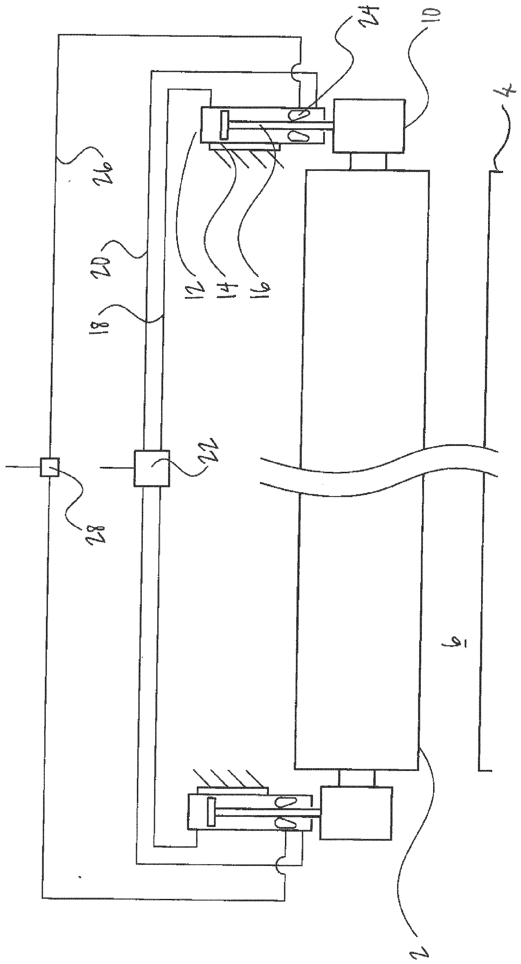

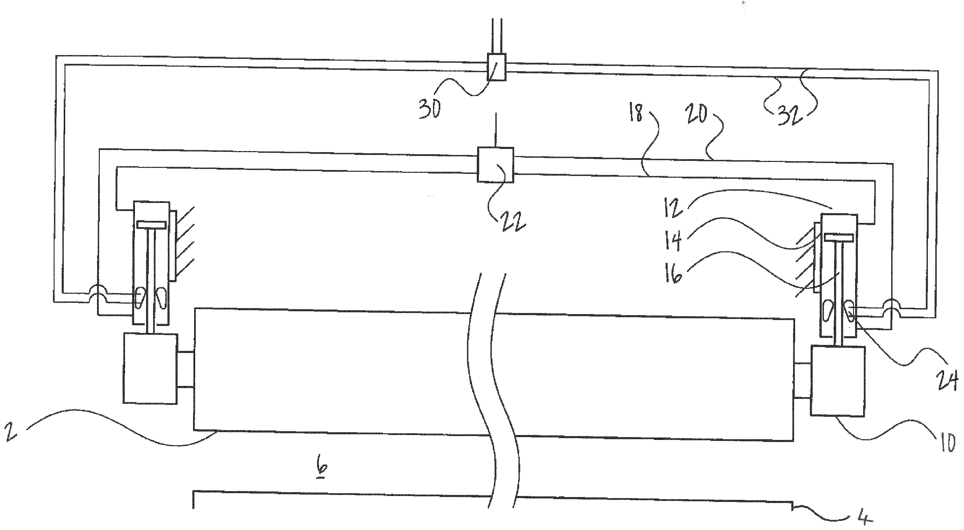

GB 2227502 discloses a calender with a stack of counter-rotating rollers, which can form nips between them (Fig. 1) or be moved slightly apart (Fig. 2). Intermediate rollers are pivotally mounted on base parts controlled via a lifting spindle. Each base part includes a stop member which rests on a relief device, which in turn rests on a spindle nut. The spacing between the stop member and the spindle nut is controlled by the relief device, which includes a plate that is raised or lowered by pressure-medium operated power units.

### Summary of the invention

The invention provides a flatbed laminator as defined in claim 1.

The invention further provides a method of configuring a flatbed laminator as defined in claim 10.

Features of the invention that are preferred but not essential are defined in the dependent claims.

The flatbed laminator according to the invention combines the advantages of the mechanical and pneumatic systems known in the prior art. The pneumatic cylinders are easily operated and can be supplied from a common source to balance the pressure at each end of the roller. Unlike the prior art, the flatbed laminator of the present invention comprises an integral locking assembly that can be operated to prevent the gap between the roller and the flatbed reducing below a minimum size. Unlike the inserts known in the prior art, this minimum size can take any value within a continuous range (or alternatively any of a large number of closely spaced discrete values). The value does not have to be chosen in advance but can be determined by the thickness of an actual workpiece.

The locks of the locking assembly act on the cylinders, for example engaging with the piston shaft of each cylinder. They may be integrated in the cylinder housings.

The method according to the invention permits the roller to be brought into engagement with the workpiece at a relatively low pressure that will avoid crushing it. The locking assembly can then be operated and, if desired, the pressure can then be made higher during the laminating process, while the workpiece remains protected against crushing.

### Drawings

Figure 1 is a schematic front view of the apparatus for positioning the roller of a flatbed laminator in accordance with a first embodiment of the invention;
Figure 2 is a schematic front view of the apparatus for positioning the roller of a flatbed laminator in accordance with a second embodiment of the invention;
Figure 3 is a schematic front view of the apparatus for positioning the roller of a flatbed laminator in accordance with a third embodiment of the invention; and
Figure 4 is a schematic front view of the apparatus for positioning the roller of a flatbed laminator in accordance with a fourth embodiment of the invention.

As shown in Figure 1, a flatbed laminator in accordance with the invention comprises a roller 2 arranged parallel to and spaced from a flatbed 4. The double wavy line indicates that the roller 2 and the flatbed 4 may be of various lengths, including for use in a wide format laminator. A movable frame (not shown) is provided rolling the roller 2 over a workpiece (not shown) positioned on the flatbed 4. The workpiece comprises a sheet of material to be laminated, having a film of laminating material in contact with an upper side of the sheet. Alternatively, the workpiece may comprise a sheet of material on which a vinyl layer is to be mounted with said vinyl layer in contact with an upper side of the sheet. The flatbed laminator can be used for any purpose for which a flatbed laminator according to the state of the art may be used. The flatbed laminator operates in a conventional manner by pressure, and optionally heat, to the workpiece as the roller 2 is rolled over an upper side of the worksheet.

In order to accommodate workpieces of different thicknesses, the size of a gap 6 between the roller 2 and the flatbed 4 needs to be adjustable. The flatbed 4 is fixed in position. A mounting 10 of the roller 2 in the frame is adjustable relative to flatbed 4 so that the roller can be moved towards or away from the flatbed 4 to change the size of the gap 6, while an axis of the roller 2 is maintained parallel to the flatbed 4.

The respective ends of the roller 2 are supported on a pair of pneumatic cylinders 12. Each cylinder 12 comprises a tube 14 that is fixed to a mounting of the roller 2 and a piston 16 that slides within the tube and projects from it. The mounting 10 of the roller 2 is supported on the projecting part of the piston 16. The head of the piston 16 divides the tube 14 into two sealed chambers, each of which is coupled to a respective line 18, 20 of a drive air supply 22. The drive air supply 22 can direct pressurised air via a first line 18 into one of the chambers of the cylinder 12 to drive the piston 16 forwards and move the roller 2 towards the flatbed 4. At different times, the drive air supply 22 can direct pressurised air via a second line 20 into the other of the chambers of the cylinder 12 to drive the piston 16 back and move the roller 2 away from the flatbed 4.

In an alternative arrangement (not illustrated), the backward movement of the piston 16 can be effected by a return spring when the pressure to the first chamber is reduced. In this case, the supply line 20 to the second chamber is not required. Pneumatic control of the roller position in this way is known in the prior art and will not be described in detail here.

Preferably the pressurised air is delivered to the pair of pneumatic cylinders 12 from a common supply so that the two cylinders always operate at the same pressure and move the two pistons 16 through the same distance, whereby the roller 2 remains parallel to the flatbed 4. To further ensure balance between the cylinders 12, the length of each branch of the supply line 18 from the common source to its respective cylinder should preferably be equal.

In accordance with a first embodiment of the present invention, each cylinder 12 is provided with an integral pneumatically-operated lock 24. The two locks 24 are coupled via supply lines 26 to a common locking air supply 28. When pressurised air from the supply 28 is applied to a lock 24, it clamps onto the piston 16 to prevent further movement of the piston out of the tube 14 and thus prevent further movement of the roller 2 toward the flatbed 4. Preferably the lock 24 acts on the piston 16 in only one direction so that the roller 2 remains able to move away from the flatbed 4, while being cushioned by the pressurised air of the drive supply 22. Each lock 24 in this embodiment comprises a pair of jaws that can be pivoted into engagement with the piston shaft to clamp the shaft between them. A range of pneumatic cylinders with locks of this kind is available from suppliers of pneumatic apparatus. It is preferred that the locks 24 should be able to engage the cylinders 12 at any position within a continuous range of movement of the roller 2 so that workpieces of any thickness within that range can be accommodated by the flatbed laminator. However, it would be an acceptable alternative to employ locks that engage the cylinders via a series of teeth, for example in the manner of a ratchet, which would allow the roller position to be set at any of a large number of closely spaced discrete values.

A flatbed laminator according to this first embodiment of the invention may be configured in the following way. A sample workpiece is placed on the flatbed 4. The drive air supply 22 is then operated to send pressurised air through the first supply line 18 to the two cylinders 12. This drives the roller 2 towards the flatbed 4 until its further movement is resisted by contact with the workpiece. The drive air pressure should be selected so that the roller does not crush the workpiece: for delicate workpiece materials such as foam board a relatively low pressure may be used. The locking assembly is then operated by applying pressurised air from the locking supply 28 to engage the locks 24 with the pistons 16 and provide mechanical resistance to further reduction of the gap 6 between the roller 2 and the flatbed 4. The laminating process can then be carried out by rotating the roller 2 and moving it across the flatbed 4 by means of the frame on which the roller 2 is mounted. When the roller 2 is moved beyond the end of the workpiece it does not crush the edge of the workpiece nor will it impact the flatbed 4 of the laminator. This is prevented by the locking assembly acting to prevent the roller 2 moving towards the flatbed 4.

After the position of the roller 2 has been set in the manner just described, it may be desirable to change the pressure of the drive air supply 22 during operation of the flatbed laminator. For example, the pressure can be increased to ensure that the roller 2 does not lift away from the workpiece during lamination, while the operation of the locking assembly protects the workpiece against crushing. The setup procedure may be carried out using just the sheet that is to be laminated, without the additional film of laminating material. When a laminating material is added during a laminating process or a mounting material is added during a mounting process, the workpiece will be slightly thicker than it was during the setup procedure so that roller 2 is forced slightly further apart than the minimum gap 6 set by the locking assembly. The pressure applied to the laminating material can therefore still be controlled through the drive air supply 22, despite the action of the locks 24.

When lamination of a workpiece is complete, or if it is desired to increase the gap 6, the locking air supply 28 can be cut off to disengage the locks 24. The drive air supply 22 is then switched from line 18 to line 20 to drive the pistons 16 in the opposite direction and move the roller 2 away from the flatbed 4.

Because a pneumatic system is required for the drive air supply 22, it is generally convenient also to operate the locking assembly pneumatically, as shown in Figure 1. However, as shown in the embodiment of Figure 2, it is equally possible to operate the locks 24 by electromechanical means such as solenoids, which are controlled from a power supply 30 via wires 32. In all other respects the second embodiment is the same as the first embodiment.

Operation of the locks 24 by purely mechanical means is also envisaged as a further alternative.

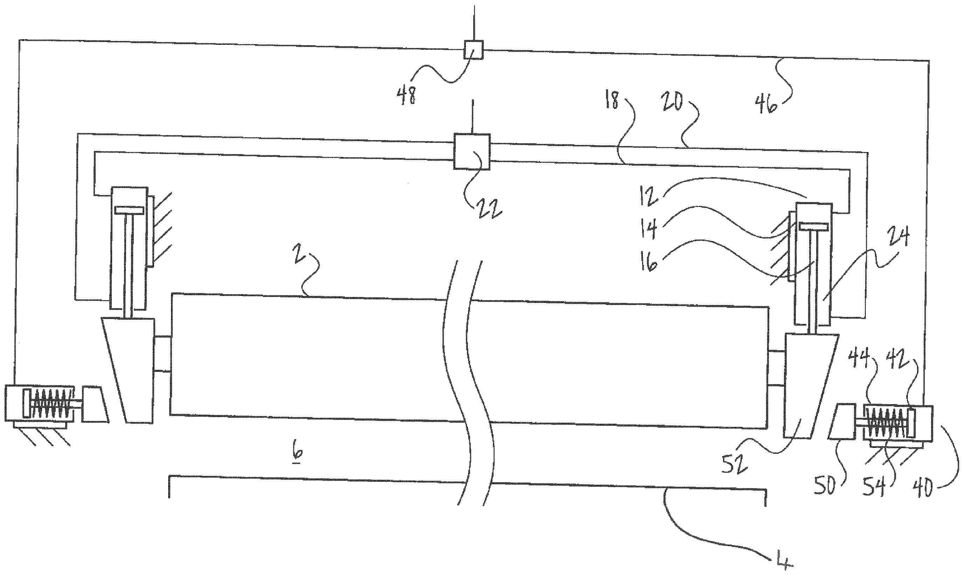

Figure 3 schematically illustrates a third embodiment of the invention, which is the same as Figure 1 except for the locking assembly. In this case, instead of locks 24 in the form of jaws that clamp the piston shaft between them, each lock 40 comprises its own pneumatic cylinder with a piston 42 sliding within a tube 44. The cylinder of each lock 40 is formed as part of, or is attached to, the cylinder that houses the associated piston 16, whereby each of the locks 40 is integrated within a housing of its respective cylinder.

A supply line 46 delivers pressurised air from a locking supply 48 to a chamber within the tube 44 to drive the piston 42 into a locking position. A first locking member 50 on the piston 42 engages the main piston 16 to prevent further movement towards the second flatbed 4 by the piston 16 and the roller 2 that it supports. The main piston 16 may carry a second locking member (not illustrated) for better engagement with the first locking member. The mutual engagement may act as a clutch and may include engagement surfaces that are inclined relative to the direction of movement of the piston 16 in order to effect a wedging action that mechanically resists that movement in the direction towards the flatbed 4 but not in the opposite direction.

To deactivate the locking assembly in this embodiment, air pressure on the supply line 46 is cut and the piston 42 is driven back into the tube 44 by the action of a return spring 54. Alternatively, a second supply line could be provided to deliver air into the tube on the opposite side of the piston 42 from the first supply line 46 so that the piston 42 is moved pneumatically in both directions.

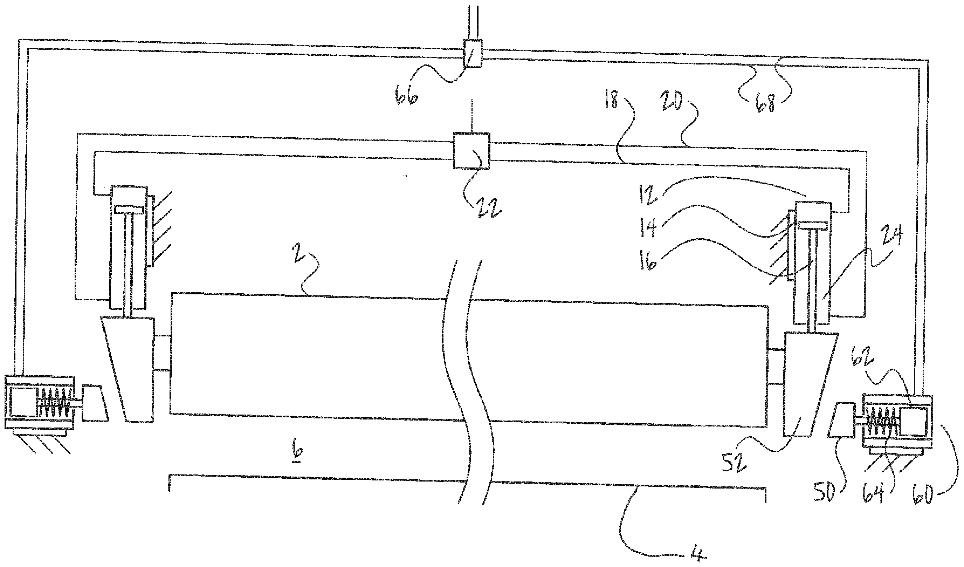

In a further embodiment of the invention, illustrated in Figure 4, the locking assembly is operated electromechanically instead of pneumatically. Each lock 60 is again integrated within a housing of its respective cylinder and comprises a solenoid 62 that is controlled from a power supply 66 via wires 68. The solenoid may be operated to drive the first locking member 50 into engagement with the main piston 16. When power to the solenoid 62 is cut, a return spring 64 causes the first locking members 50 to disengage from the piston 16. In other respects, this embodiment is identical to that shown in Figure 3.

Locks similar to those shown in Figures 3 and 4 may also be operated by purely mechanical means.

## Claims

1. A flatbed laminator for laminating a workpiece, the flatbed laminator comprising:
a flatbed (4) on which the workpiece can be positioned;
a roller (2) mounted to be movable over the flatbed, wherein a gap (6) is defined between the flatbed (4) and the roller (2) through which the workpiece is capable of being fed;
a pair of parallel pneumatic cylinders (12), on which respective ends of the roller (2) are supported, whereby the cylinders (12) can be operated to move the roller (2) towards flatbed; and
a locking assembly comprising a pair of locks (24,40,60) that can be operated to act on the respective cylinders (12) to prevent movement of the roller (2) towards the flatbed (4).

2. A flatbed laminator according to claim 1, wherein operation of the locks (24,40,60) does not prevent movement of the roller (2) away from the flatbed (4).

3. A flatbed laminator according to claim 1 or claim 2, wherein each of the locks (24,40,60) is integrated within a housing of its respective cylinder (12).

4. A flatbed laminator according to any of claims 1 to 3, wherein the locking assembly is operated pneumatically.

5. A flatbed laminator according to any of claims 1 to 3, wherein the locking assembly is operated electro-mechanically.

6. A flatbed laminator according to any of claims 1 to 3, wherein the locking assembly is operated mechanically.

7. A flatbed laminator according to any preceding claim, wherein the locking assembly can be operated at any position within a continuous range of movement of the cylinders (12).

8. A flatbed laminator according to any preceding claim, further comprising a common air supply (22) for the pair of pneumatic cylinders (12).

9. A flatbed laminator according to claim 8, wherein the respective cylinders (12) are coupled to the common air supply (22) via conduits (18,20) of equal length.

10. A method of configuring a flatbed laminator for laminating a workpiece, the flatbed laminator having a roller (2) mounted to be movable over a flatbed (4), wherein a gap (6) is defined between the flatbed (4) and the roller (2) through which the workpiece is capable of being fed, the method comprising:
applying air at a first pressure to a pair of parallel pneumatic cylinders (12), on which respective ends of the roller (2) are supported, to move the roller (2) towards the flatbed (4); and
operating a locking assembly comprising a pair of locks (24,40,60) that act on the respective cylinders (12) to prevent further movement of the roller (2) towards the flatbed (4).

11. A method according to claim 10, comprising a preliminary step of placing a workpiece on the flatbed (4), wherein the step of moving the roller (2) is continued until the roller (2) is in contact with the workpiece.

12. A method according to claim 10 or claim 11, further comprising, after the locking assembly has been operated, applying air to the cylinders (12) at a second pressure different from the first pressure.

13. A method according to claim 12, wherein the second pressure is higher than the first pressure.

## Patentansprüche

1. Flachbettlaminator zum Laminieren eines Werkstücks, wobei der Flachbettlaminator folgende Merkmale aufweist:
ein Flachbett (4), auf welchem das Werkstück positioniert werden kann,
eine Walze (2), welche derart montiert ist, dass sie über das Flachbett bewegt werden kann, wobei ein Spalt (6) zwischen dem Flachbett (4) und der Walze (2) definiert ist, durch welchen das Werkstück hindurchgeführt werden kann,
ein Paar paralleler pneumatischer Zylinder (12), auf welchen entsprechende Enden der Walze (2) getragen werden, wodurch die Zylinder (12) betrieben werden können, um die Walze (2) auf das Flachbett zubewegen und
eine Verriegelungsanordnung mit einem Paar Sperren (24, 40, 60), welche so betrieben werden können, dass sie auf die entsprechenden Zylinder (12) wirken, um eine Bewegung der Walze (2) auf das Flachbett (4) zu zu verhindern.

2. Flachbettlaminator nach Anspruch 1, bei welchem ein Betrieb der Sperren (24, 40, 60) eine Bewegung der Walze (2) weg von dem Flachbett (4) nicht verhindert.

3. Flachbettlaminator nach Anspruch 1 oder Anspruch 2, bei dem jede der Sperren (24, 40, 60) innerhalb eines Gehäuses ihres entsprechenden Zylinders (12) integriert ist.

4. Flachbettlaminator nach einem der Ansprüche 1 bis 3, bei dem die Verriegelungsanordnung pneumatisch betrieben wird.

5. Flachbettlaminator nach einem der Ansprüche 1 bis 3, bei dem die Verriegelungsanordnung elektromechanisch betrieben wird.

6. Flachbettlaminator nach einem der Ansprüche 1 bis 3, bei dem die Verriegelungsanordnung mechanisch betrieben wird.

7. Flachbettlaminator nach einem der vorhergehenden Ansprüche, bei dem die Verriegelungsanordnung in jeder Position innerhalb eines kontinuierlichen Bewegungsbereichs der Zylinder (12) betrieben werden kann.

8. Flachbettlaminator nach einem der vorhergehenden Ansprüche, mit einer gemeinsamen Lufteinspeisung (22) für das Paar pneumatischer Zylinder (12).

9. Flachbettlaminator nach Anspruch 8, bei dem die entsprechenden Zylinder (12) mit der gemeinsamen Lufteinspeisung (22) über Leitungen (18, 20) gleicher Länge gekoppelt sind.

10. Verfahren zum Aufbauen eines Flachbettlaminators zum Laminieren eines Werkstücks, wobei der Flachbettlaminator eine Walze (2) hat, welche so montiert ist, dass sie über ein Flachbett (4) bewegbar ist, wobei zwischen dem Flachbett (4) und der Walze (2) ein Spalt (6) definiert ist, durch welchen das Werkstück hindurch geführt werden kann, wobei das Verfahren folgende Schritte aufweist:
Aufbringen von Luft bei einem ersten Druck zu einem Paar paralleler pneumatischer Zylinder (12), auf welchen entsprechende Enden der Walze (2) getragen werden, um die Walze (2) auf das Flachbett (4) zu zu bewegen, und
Betreiben einer Verriegelungsvorrichtung mit einem Paar von Sperren (24, 40, 60), welche auf die entsprechenden Zylinder (12) wirken, um eine weitere Bewegung der Walze (2) auf das Flachbett (4) zu zu verhindern.

11. Verfahren nach Anspruch 10, mit einem vorgezogenen Schritt Platzieren eines Werkstücks auf dem Flachbett (4), bei dem der Schritt Bewegen der Walze (2) fortgeführt wird, bis die Walze (2) in Kontakt mit dem Werkstück steht.

12. Verfahren nach Anspruch 10 oder Anspruch 11, mit einem weiteren Schritt, nachdem die Verriegelungsvorrichtung betrieben wurde, Aufbringen von Luft zu den Zylindern (12), bei einem zweiten Druck, der verschieden von dem ersten Druck ist.

13. Verfahren nach Anspruch 12, bei dem der zweite Druck höher ist als der erste Druck.

## Revendications

1. Dispositif de laminage à lit plat pour laminer une pièce de travail, le dispositif de laminage à lit plat comprenant :
un lit plat (4) sur lequel la pièce de travail peut être positionnée ;
un rouleau (2) monté de façon à pouvoir être déplacé au-dessus du lit plat, un espace (6) étant défini entre le lit plat (4) et le rouleau (2), à travers lequel la pièce de travail est susceptible d'être délivrée ;
une paire de cylindres pneumatiques parallèles (12), sur lesquels sont supportées des extrémités respectives du rouleau (2), grâce à quoi les cylindres (12) peuvent être actionnés de façon à déplacer le rouleau (2) vers le lit plat ; et
un ensemble de verrouillage comprenant une paire de verrous (24, 40, 60) qui peuvent être actionnés de façon à agir sur les cylindres respectifs (12) de façon à empêcher un mouvement du rouleau (2) vers le lit plat (4).

2. Dispositif de laminage à lit plat selon la revendication 1, dans lequel l'actionnement des verrous (24, 40, 60) n'empêche pas l'éloignement du rouleau (2) par rapport au lit plat (4).

3. Dispositif de laminage à lit plat selon la revendication 1 ou la revendication 2, dans lequel chacun des verrous (24, 40, 60) est intégré à l'intérieur d'un boîtier de son cylindre respectif (12).

4. Dispositif de laminage à lit plat selon l'une quelconque des revendications 1 à 3, dans lequel l'ensemble de verrouillage est actionné de façon pneumatique.

5. Dispositif de laminage à lit plat selon l'une quelconque des revendications 1 à 3, dans lequel l'ensemble de verrouillage est actionné de façon électromécanique.

6. Dispositif de laminage à lit plat selon l'une quelconque des revendications 1 à 3, dans lequel l'ensemble de verrouillage est actionné mécaniquement.

7. Dispositif de laminage à lit plat selon l'une quelconque des revendications précédentes, dans lequel l'ensemble de verrouillage peut être actionné dans n'importe quelle position à l'intérieur d'une plage de déplacement continue des cylindres (12).

8. Dispositif de laminage à lit plat selon l'une quelconque des revendications précédentes, comprenant de plus une alimentation en air commune (22) pour la paire de cylindres pneumatiques (12).

9. Dispositif de laminage à lit plat selon la revendication 8, dans lequel les cylindres respectifs (12) sont couplés à l'alimentation en air commune (22) par l'intermédiaire de conduits (18, 20) de longueur égale.

10. Procédé de configuration d'un dispositif de laminage à lit plat pour laminer une pièce de travail, le dispositif de laminage à lit plat comportant un rouleau (2) monté de façon à pouvoir être déplacé au-dessus d'un lit plat (4), un espace (6) étant défini entre le lit plat (4) et le rouleau (2), à travers lequel la pièce de travail est susceptible d'être délivrée, le procédé comprenant :
l'application d'air sous une première pression à une paire de cylindres pneumatiques parallèles (12), sur lesquels sont supportées des extrémités respectives du rouleau (2), de façon à déplacer le rouleau (2) vers le lit plat (4) ; et
l'actionnement d'un ensemble de verrouillage comprenant une paire de verrous (24, 40, 60) qui agissent sur les cylindres respectifs (12) de façon à empêcher un plus ample déplacement du rouleau (2) vers le lit plat (4) .

11. Procédé selon la revendication 10, comprenant une étape préliminaire consistant à disposer une pièce de travail sur le lit plat (4), l'étape de déplacement du rouleau (2) étant poursuivie jusqu'à ce que le rouleau (2) soit en contact avec la pièce de travail.

12. Procédé selon la revendication 10 ou la revendication 11, comprenant de plus, après que l'ensemble de verrouillage a été actionné, l'application d'air aux cylindres (12) sous une deuxième pression différente de la première pression.

13. Procédé selon la revendication 12, dans lequel la deuxième pression est supérieure à la première pression.
